# EUROPÄISCHE PATENTSCHRIFT

(11) **EP 0 683 068 B1**
(45) Veröffentlichungstag und Bekanntmachung des Hinweises auf die Patenterteilung: **02.06.1999**
(21) Anmeldenummer: 95103381.0
(22) Anmeldetag: 09.03.1995
(51) Int. Cl.: B60Q 1/30, B60Q 1/52

(54) **Überwachungseinrichtung**
Control device
Dispositif de contrôle

(30) Priorität: 26.03.1994 DE 4410617
(43) Veröffentlichungstag der Anmeldung: 22.11.1995
(73) Patentinhaber: REITTER & SCHEFENACKER GmbH & Co. KG, D-73730 Esslingen (DE)
(72) Erfinder: Waldmann, Bernd, D-73733 Esslingen (DE); Kusuma, Djuanarto, D-96472 Rödental (DE)
(74) Vertreter: Jackisch-Kohl, Anna-Katharina

(56) Entgegenhaltungen:
- WO-A-93/16397
- DE-A- 4 303 066
- US-A- 4 801 938

## Beschreibung

Die Erfindung betrifft eine Überwachungseinrichtung nach dem Oberbegriff des Anspruches 1.

Es ist bekannt, im Heckbereich eines Kraftfahrzeuges Ultraschallsensoren vorzusehen, mit denen beim Rückwärtsfahren der Abstand zu einem hinter dem Fahrzeug befindlichen Hindernis überwacht werden kann. Innerhalb des Fahrzeuges befindet sich eine optische und/oder akustische Warneinrichtung, die dem Fahrer anzeigt, wie weit er noch vom Hindernis entfernt ist. Die entsprechenden Anzeigen sowie die zugehörige Elektronik sind in gesonderten Gehäusen untergebracht, die im Fahrzeug eingebaut sind. Nachteilig bei dieser bekannten Lösung ist, daß für die einzelnen Teile dieser Überwachungseinrichtung unterschiedliche Gehäuse erforderlich sind. Dadurch ist die Überwachungseinrichtung in der Herstellung aufwendig und teuer. Außerdem ist die Montage der Überwachungseinrichtung wegen der zahlreichen Einzelteile aufwendig.

Bei der gattungsgemäßen Überwachungseinrichtung (US-A-4,801,938) ist eine Empfangseinrichtung in einem im Heckbereich des Fahrzeuges befestigten Bremsleuchtengehäuse untergebracht. Die Überwachungseinrichtung dient als Radarwarngerät, mit dem von zur Geschwindigkeitskontrolle auf den Straßen aufgestellten Radarmeßgeräten ausgesandte Radarstrahlen erfaßt und dem Fahrer angezeigt werden. Innerhalb des Bremsleuchtengehäuses sitzen ein optisches und ein akustisches Sensorelement, deren Strahlen bzw. Schallwellen von einem Detektor erfaßt und über unterschiedliche Signalwege einem optischen sowie einem akustischen Anzeigeelement zugeleitet werden. Diese Anzeigeelemente sind an der Außenseite der Rückwand des Bremsleuchtengehäuses vorgesehen. Da die Bremsleuchte auf der Hutablage des Kraftfahrzeuges befestigt ist, besteht durch auf ihr abgelegte und während des Fahrens herumrutschende Gegenstände die Gefahr, daß die Anzeigeelemente beschädigt oder gar abgerissen werden. Dann kann diese Überwachungseinrichtung ihre Warnfunktion nicht mehr erfüllen. Darüber hinaus kann mit dieser Überwachungseinrichtung der Abstand des Kraftfahrzeuges von einem hinter ihm befindlichen Hindernis nicht festgestellt und angezeigt werden.

Der Erfindung liegt die Aufgabe zugrunde, die gattungsgemäße Überwachungseinrichtung so auszubilden, daß sie einfach und kostengünstig in der Herstellung ist, sich einfach und bei geringstem Platzbedarf montieren läßt und ermöglicht, den Abstand des Fahrzeuges von einem Hindernis dem Fahrer deutlich anzuzeigen.

Diese Aufgabe wird bei der gattungsgemäßen Überwachungseinrichtung erfindungsgemäß mit den kennzeichnenden Merkmalen des Anspruches 1 gelöst.

Mit der erfindungsgemäßen Überwachungseinrichtung läßt sich einfach und zuverlässig genau der Abstand des Kraftfahrzeuges von einem hinter ihm befindlichen Hindernis erfassen und anzeigen. Über die Anzeigefelder des Lichtfensters kann dem Fahrer auf konstruktiv einfache Weise zuverlässig mitgeteilt werden, wie groß der Abstand seines Kraftfahrzeuges vom Hindernis ist. Dadurch können insbesondere auch ungeübte Fahrer gefahrlos selbst in enge Parklücken einparken. Das Anzeigeelement liegt innerhalb des Bremsleuchtengehäuses und kann darum von auf der Hutablage abgelegten und hin und her rutschenden Gegenständen nicht beschädigt oder gar abgerissen werden. Dadurch ist gewährleistet, daß die erfindungsgemäße Überwachungseinrichtung ihre Sicherungsfunktion über eine lange Einsatzdauer gewährleistet.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: eine Draufsicht auf ein Fahrzeug mit einer erfindungsgemäßen Überwachungseinrichtung,
- Fig. 2: eine Bremsleuchte eines Kraftfahrzeuges, in der eine Anzeigeeinrichtung der erfindungsgemäßen Überwachungseinrichtung untergebracht ist, in Ansicht gemäß Pfeil II in Fig. 3,
- Fig. 3: die Bremsleuchte mit der Anzeigeeinrichtung in vergrößerter Darstellung und im Längsschnitt,
- Fig. 4: die Bremsleuchte nach Fig. 3 in Ansicht gemäß Pfeil IV in Fig. 3,
- Fig. 5: die Bromsleuchte mit der Anzeigeeinrichtung in Seitenansicht.

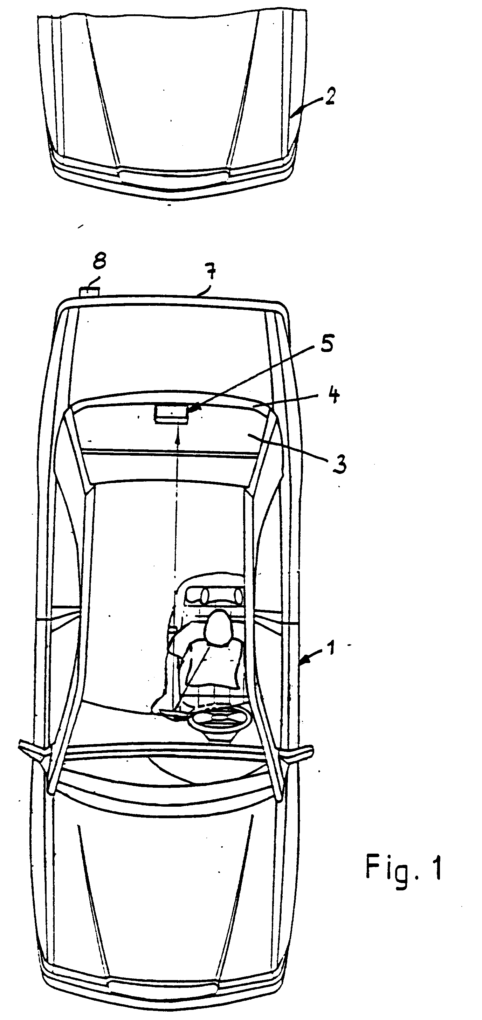

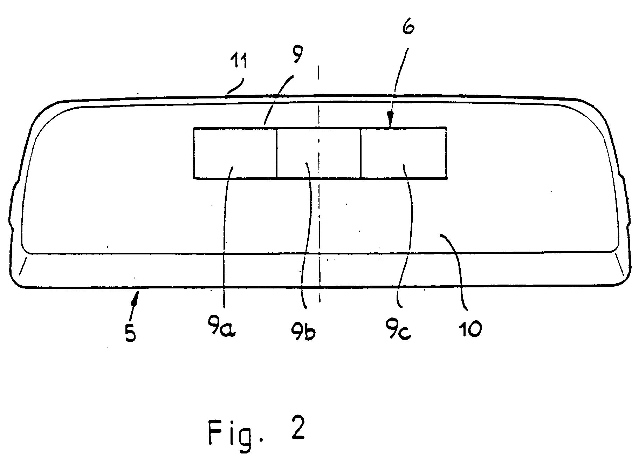

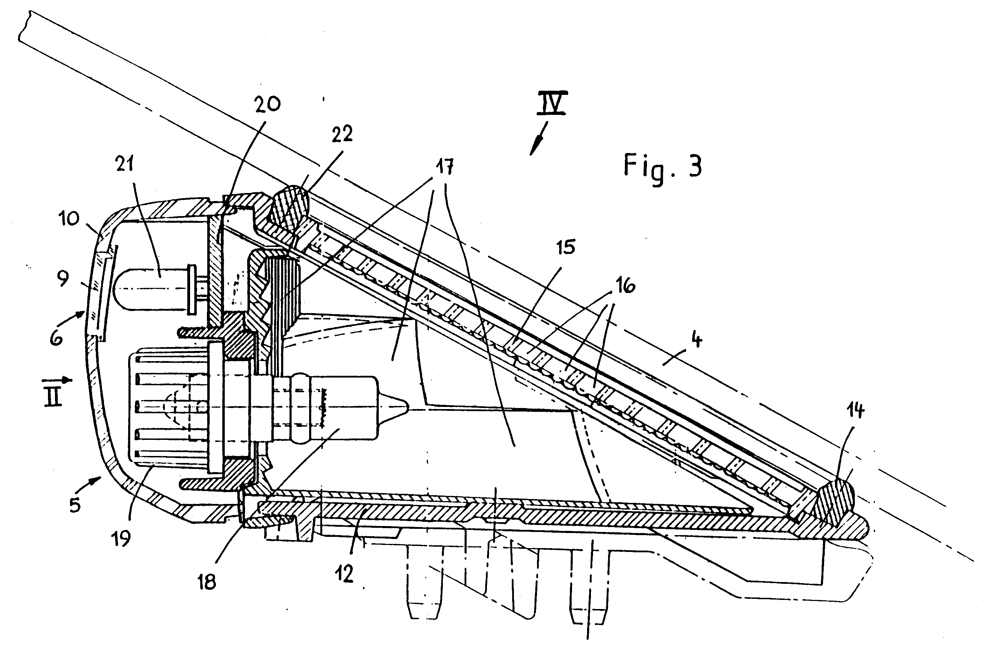

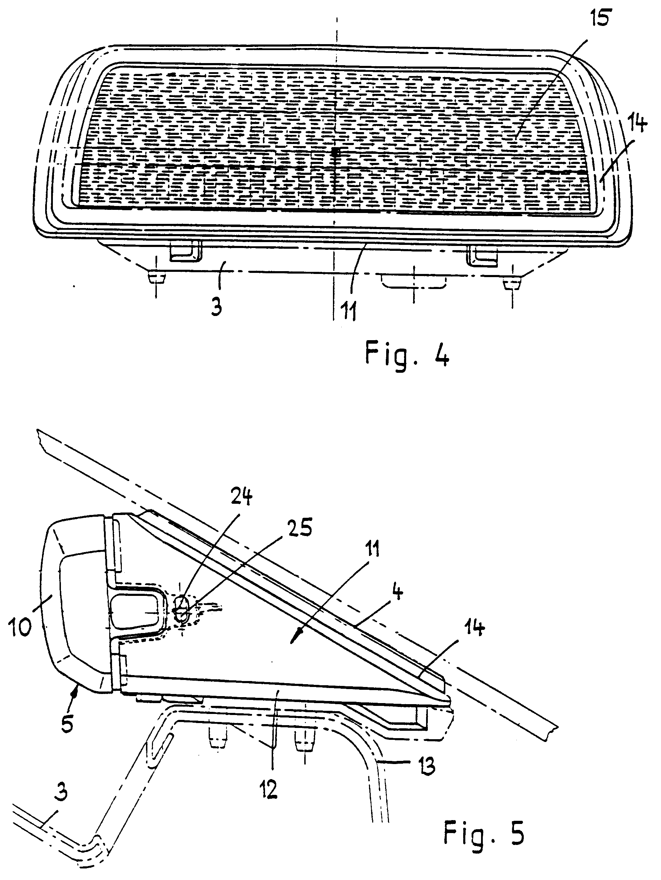

Fig. 1 zeigt zwei mit Abstand hintereinander angeordnete Pkws 1 und 2. Im ersten Pkw ist im Innenraum im Heckbereich eine hochgesetzte Bremsleuchte 5 vorgesehen, die vorzugsweise auf einer Hutablage 3 befestigt ist und an der Heckscheibe 4 des Kraftfahrzeuges anliegt (Fig. 3). Die Bremsleuchte 5 ist mit einer Anzeigeeinrichtung bzw. -einheit 6 versehen, mit welcher beim Rückwärtsfahren des Pkws 1 der Abstand zu einem rückwärtigen Fahrzeug 2 (Fig. 1) angezeigt wird. Über einen im Heckbereich, vorzugsweise an der Stoßstange 7, vorgesehenen und in Fig. 1 nur schematisch dargestellten Ultraschall- oder Infrarotsensor 8 wird der Abstand zum rückwärtigen Fahrzeug 2 gemessen und über eine (nicht dargestellte), jedoch an sich bekannte elektronische Einrichtung ein entsprechendes Signal an die Anzeigeeinrichtung 6 geleitet. Die Anzeigeeinrichtung 6 und der Sensor 8 sind Teil der Überwachungseinrichtung, die insbesondere als Einparkhilfe eingesetzt werden kann. Die Anzeigeeinrichtung 6 weist ein als Lichtfenster ausgebildetes Anzeigefeld 9 auf (Fig. 2), das in einen Deckel 10 des Gehäuses 1 der Bremsleuchte 5 integriert ist. Das Bremsleuchtengehäuse 11 hat einen Boden 12, mit dem es auf der Hutablage 3 bzw. auf einem Rahmen 13 (Fig. 5) befestigt ist, an dem die Hutablage 3 ihrerseits gehalten ist. Wie Fig. 3 zeigt, liegt das Bremsleuchtengehäuse 11 mit einem ein Lichtfenster 15 umgebenden Dämpfungsring 14 an der Heckscheibe 4 an. Außerdem dient der Dämpfungsring 14 zur Abschirmung des Bremslichtes, damit es nicht in das Fahrzeuginnere fällt. Das Lichtfenster 15 ist in bekannter Weise mit Linsenelementen 16 versehen (Fig. 3). Innerhalb des Gehäuses 11 sind ein Stufenreflektor 17, eine Glühlampe 18 mit einer Glühlampenfassung 19 für das Bremslicht 5 und eine Leiterplatte 20 untergebracht, auf der optische Anzeigeelemente 21, wie LEDs, Glühlampen und dergleichen, vorgesehen sind, die hinter dem Anzeigefeld 9 liegen, das durch eine Lichtscheibe gebildet ist. Die Leiterplatte 20 kann auch im Deckel 10 vorgesehen sein.

Das Gehäuse 11 und der Deckel 10 sind durch an sich bekannte lösbare Rasteinrichtungen 24, 25 zusammengehalten, so daß die Elektronik bzw. die Glühlampe 18 der Bremsleuchte leicht zugänglich sind.

Das Anzeigefeld 9 erstreckt sich in Längsrichtung des Deckels 10 und liegt vorzugsweise symmetrisch zur Quermittelebene E des Gehäuses 11. Wie Fig. 2 zeigt, liegt das Anzeigefeld 9 mit geringem Abstand vom unteren Dekkelrand. Es hat vorzugsweise drei gleich große rechtekkige Fensterbereiche 9a bis 9c, die unterschiedlich eingefärbt sind, nämlich rot, gelb und grün. Vorteilhaft kann die optische Anzeige mit einer akustischen Anzeige gekoppelt sein. So können beispielsweise beim Aufleuchten des ersten Fensterbereiches 9a, der beispielsweise rot eingefärbt ist, ein Dauerton, beim Aufleuchten des mittleren, gelb eingefärbten Fensterbereiches 9b mehrere Pipstöne und beim Aufleuchten des Fensterbereiches 9c, der grün eingefärbt ist, ein einziger Piepston ertönen. Der Fahrer des Fahrzeuges 1 wird dadurch optimal darüber informiert, wie groß der Abstand des Fahrzeuges 1 vom rückwärtigen Fahrzeug 2 ist. Ist dieser Abstand noch ausreichend groß, dann leuchtet der grüne Fensterbereich 9c auf. Bei einer zusätzlichen akustischen Anzeige ertönt ein einziger Piepston. Wird der Abstand zum hinteren Fahrzeug 2 geringer, beispielsweise 0,5 m, dann leuchtet der gelbe Fensterbereich 9b auf. Zusätzlich können mehrere Piepstöne ertönen. Ist der Abstand sehr gering, z. B nur noch 15 cm, dann leuchtet der rote Fensterbereich 9a auf. Gleichzeitig kann der Dauerton zu hören sein, falls eine akustische Anzeige vorgesehen ist. Der Fahrer weiß dann, daß er sein Fahrzeug 1 anhalten muß.

Mit dem Sensor 8 kann der Abstand des Fahrzeuges 1 beim Rückwärtsfahren zu jedem beliebigen Hindernis überwacht werden. Auf der Leiterplatte 20 befindet sich die für den Sensor 8 erforderliche Steuerung, die in bekannter Weise ausgebildet und darum nicht näher beschrieben ist. Die Stromversorgung der Überwachungseinrichtung erfolgt über die Fahrzeugbatterie. Es ist aber auch möglich, zur Stromversorgung der Überwachungseinrichtung einen Akku vorzusehen.

Da das Anzeigefeld 9 dem Fahrer zugewandt ist, kann er beim Rückwärtsfahren die optische Anzeige einfach erkennen, indem er sie über den Innenrückspiegel beobachtet oder sich umwendet, um direkt auf die optische Anzeige zu blicken. Dadurch ist es beispielsweise auch ungeübten Kraftfahrzeugfahrern ohne weiteres möglich, sicher in enge Parklücken einzuparken.

Da die Anzeigeeinrichtung 6 im Leuchtengehäuse 11 untergebracht ist, ist ein gesondertes Gehäuse für die Anzeigeeinrichtung nicht erforderlich. Fertigungskosten und zusätzlicher Einbauraum können dadurch eingespart werden. Eine Leitungsverbindung zwischen der Anzeigeeinrichtung 6 und ihrer Elektronik entfällt, da die Elektronik auf der Leiterplatte 20 sitzt.

Die Elektronik auf der Leiterplatte 20 und die Anzeigeeinrichtung 6 werden getrennt von der Bremsleuchte 5 mit Strom versorgt, die in bekannter Weise mit dem (nicht dargestellten) Bremspedal des Fahrzeuges 1 gekoppelt ist. Die Anzeigeeinrichtung 6 und die zugehörige Elektronik werden dann eingeschaltet, wenn am Fahrzeug 1 der Rückwärtsgang eingelegt wird.

## Patentansprüche

1. Im Heckbereich eines Kraftfahrzeuges (1) angeordnete Überwachungseinrichtung, mit mindestens einem Sensor (8), der mit einer im Innenraum des Kraftfahrzeuges (1) angeordneten optischen Anzeigeeinheit (6) verbunden ist, die an einem Deckel (10) eines Gehäuses (11) einer im Heckscheibenbereich (4) innerhalb des Kraftfahrzeuges (1) angeordneten Bremsleuchte (5) sitzt und ein Anzeigeelement (21) aufweist,
dadurch gekennzeichnet, daß die Überwachungseinrichtung zur Anzeige des Abstandes des Kraftfahrzeuges (1) von einem Hindernis (2) vorgesehen ist, und daß die Anzeigeeinheit (6) ein im Gehäusedeckel (10) vorgesehenes Lichtfenster (9) mit nebeneinanderliegenden Anzeigefeldern (9 a bis 9 c) aufweist, das vom Anzeigeelement (21) beleuchtet wird, das hinter dem Gehäusedeckel (10) innerhalb des Gehäuses (1) angeordnet ist.

2. Überwachungseinrichtung nach Anspruch 1,
dadurch gekennzeichnet, daß der Deckel (10) am Bremsleuchtengehäuse (11) rastend gehalten ist.

3. Überwachungseinrichtung nach Anspruch 1 oder 2,
dadurch gekennzeichnet, daß die Anzeigeeinheit (6) zusammen mit ihrer elektrischen bzw. elektronischen Steuerung im Bremsleuchtengehäuse (11) angeordnet ist.

4. Überwachungseinrichtung nach Anspruch 4,
dadurch gekennzeichnet, daß das Lichtfenster (9) drei nebeneinander liegende, verschiedenfarbige Anzeigenfelder (9a bis 9c) aufweist.

5. Überwachungseinheit nach einem der Ansprüche 1 bis 6,
dadurch gekennzeichnet, daß die Anzeigeeinheit (6) mit einem akustischen Signalgeber gekoppelt ist.

6. Überwachungseinrichtung nach Anspruch 4 oder 5,
dadurch gekennzeichnet, daß jedem Anzeigefeld (9a bis 9c) ein anderer Signalton oder eine andere Tonfolge zugeordnet ist.

7. Überwachungseinrichtung nach einem der Ansprüche 4 bis 6,
dadurch gekennzeichnet, daß hinter jedem Anzeigefeld (9a bis 9c) jeweils ein Anzeigeelement (21), vorzugsweise eine LED-Leuchte, im Bremsleuchtengehäuse (11) angeordnet ist.

8. Überwachungseinrichtung nach Anspruch 7,
dadurch gekennzeichnet, daß die Anzeigeelemente (21) auf einer Leiterplatte (20) im Bremsleuchtengehäuse (11) angeordnet sind.

## Claims

1. A monitoring device arranged in the tail region of a motor vehicle (1), with at least one sensor (8) connected to an optical display unit (6) which is arranged in the interior of the motor vehicle (1) and which is mounted on a cover (10) of a housing (11) of a brake light (5) arranged in the rear-window area (4) inside the motor vehicle (1) and has a display element (21), **characterized in that** the monitoring device is provided for displaying the distance of the motor vehicle (1) from an obstacle (2), and the display unit (6) has a light window (9) which has adjacent display areas (9a to 9c) and is provided in the housing cover (10) and which is illuminated by the display element (21) arranged behind the housing cover (10) inside the housing (11).

2. A monitoring device according to Claim 1, **characterized in that** the cover (10) is held in an engaged manner on the brake-light housing (11).

3. A monitoring device according to Claim 1 or 2, **characterized in that** the display unit (6) together with its electrical or electronic control is arranged in the brake-light housing (11).

4. A monitoring device according to Claim 4, **characterized in that** the light window (9) has three differently coloured display areas (9a to 9c) situated adjacent to one another.

5. A monitoring unit according to one of Claims 1 to 6, **characterized in that** the display unit (6) is coupled to an acoustic signal transmitter.

6. A monitoring device according to Claim 4 or 5, **characterized in that** each display area (9a to 9c) has associated therewith a different signalling tone or a different tone sequence.

7. A monitoring device according to one of Claims 4 to 6, **characterized in that** one respective display element (21), preferably an LED lamp, is arranged in each case in the brake-light housing (11) behind each display area (9a to 9c).

8. A monitoring device according to Claim 7, **characterized in that** the display elements (21) are arranged on a printed circuit board (20) in the brake-light housing (11).

## Revendications

1. Dispositif de surveillance agencé dans la région arrière d'un véhicule automobile (1), comprenant au moins un capteur (8), relié à une unité d'indication optique (6) agencée dans l'habitacle du véhicule (1), ladite unité d'indication étant disposée sur un couvercle (10) d'un boîtier (11) d'une lampe de freinage (5) agencée dans la région de la vitre arrière (4) à l'intérieur du véhicule (1) et présentant un élément d'indication (21),
caractérisé en ce que le dispositif de surveillance est prévu pour indiquer la distance entre le véhicule (1) et un obstacle (2), et en ce que l'unité d'indication (6) présente une fenêtre lumineuse (9), prévue dans un couvercle (10) du boîtier et comportant des champs d'indication (9a à 9c) disposés les uns à côté des autres, ladite fenêtre étant illuminée par un élément d'indication (21) qui est agencé derrière le couvercle du boîtier (10) à l'intérieur du boîtier (1).

2. Dispositif de surveillance selon la revendication 1, caractérisé en ce que le couvercle (10) est retenu par enclenchement sur le boîtier (11) de la lampe de freinage.

3. Dispositif de surveillance selon l'une ou l'autre des revendications 1 et 2, caractérisé en ce que l'unité d'indication (6) est agencée dans le boîtier (11) de la lampe de freinage, conjointement avec sa commande électrique ou électronique.

4. Dispositif de surveillance selon la revendication 3, caractérisé en ce que la fenêtre lumineuse (9) comporte trois champs d'indication (9a à 9c) disposés les uns à côté des autres et présentant des couleurs différentes.

5. Dispositif d'affichage selon l'une des revendications 1 à 4, caractérisé en ce que l'unité d'indication (6) est accouplée à un générateur de signal acoustique.

6. Dispositif de surveillance selon l'une ou l'autre des revendications 4 et 5, caractérisé en ce qu'à chaque champ d'indication (9a à 9c) est associé un autre ton de signalisation ou une autre succession de tons.

7. Dispositif de surveillance selon l'une des revendications 4 à 6, caractérisé en ce que derrière chaque champ d'indication (9a à 9c) est agencé un élément d'indication respectif (21), de préférence une lampe à diode électroluminescente, dans le boîtier (11) de la lampe de freinage.

8. Dispositif de surveillance selon la revendication 7, caractérisé en ce que les éléments d'indication (21) sont agencés sur une plaque à circuits imprimés (20) dans le boîtier (11) de la lampe de freinage.
